# EUROPÄISCHE PATENTANMELDUNG

(11) **EP 4 749 517 A1**
(43) Veröffentlichungstag der Anmeldung: **27.05.2026**
(21) Anmeldenummer: 26154732.7
(22) Anmeldetag: 10.12.2015
(51) Int. Cl.: G06K 19/02, G06K 19/07, G06Q 10/08, G06Q 10/087, G09F 3/20, G06Q 20/20

(54) **SELBSTVERBUCHUNGSSYSTEM ZUM DURCHFÜHREN EINER BEZAHLTRANSAKTION FÜR EINEN VON EINER ANZEIGEVORRICHTUNG ÜBERMITTELTEN PRODUKTDATENSATZ**

(62) Teilanmeldung aus: 23192884.7
(71) Anmelder: VusionGroup GmbH, 8072 Fernitz-Mellach (AT)
(72) Erfinder: Rössl, Andreas, 8072 Fernitz-Mellach (AT)
(74) Vertreter: Schneider, Michael

(57) **Zusammenfassung**

Die Erfindung betrifft die Verwendung einer Anzeigevorrichtung zur räumlich lokalisierten Bereitstellung eines individuellen Produktdatensatzes in einem Selbstverbuchungssystem zwecks lokaler Übertragung des Produktdatensatzes von der Anzeigevorrichtung an ein bei der Anzeigevorrichtung mit Hilfe einer Selbstverbuchungs-Anfrage anfragendes Selbstverbuchungsgerät, wobei die Anzeigevorrichtung eine erste Funkschnittstelle zur Kommunikation mit einer Basisstation, eine Speicherstufe zur Speicherung des Produktdatensatzes, der bei einer Kommunikation mit der Basisstation über die erste Funkschnittstelle empfangen wurde, und eine zweite Funkschnittstelle zur Übertragung des Produktdatensatzes aufweist und wobei die Anzeigevorrichtung im Rahmen der Selbstverbuchungs-Anfrage einen Lagerstand zu einem durch Selbstverbuchungs-Anfragen betroffenen Produkt mit Hilfe der ersten Funkschnittstelle abfragt.

## Beschreibung

### Technisches Feld

Die Erfindung betrifft die Verwendung einer Anzeigevorrichtung zur räumlich lokalisierten Bereitstellung eines individuellen Produktdatensatzes in einem Selbstverbuchungssystem.

### Hintergrund

Eine bekannte Anzeigevorrichtung, auch elektronisches Preisanzeigeschild, im Fachjargon auch "Electronic Shelf Label", kurz ESL genannt, steht im Betrieb mit einer Basisstation in Funkkontakt. Über diesen Funkkontakt wird die Anzeigevorrichtung mit einer Preis- und / oder Produktinformation versorgt und visualisiert diese mit ihrer Anzeigeeinrichtung. Das ESL ist üblicherweise an einer Regalschiene eines Regals befestigt, auf dem das betreffende Produkt gelagert bzw. angeboten wird, zu dem die Preis- und / oder Produktinformation korrespondiert. Produkte können mit "Radio-Frequency-Identification-Device" (abgekürzt RFID) Etikett und / oder Strichcode zu ihrer Identifikation ausgestattet sein. Ein Kunde wählt Produkte zum Kauf aus, legt sie in seinen Einkaufswagen, fährt mit dem Einkaufswagen bis zum Kassenschalter und legt die Produkte zur Erfassung zwecks Verrechnung auf ein Förderband. Dort werden die Produkte, wenn ausgestattet mit RFID-Etiketten, entweder mit Hilfe einer RFID-Leseeinrichtung (RFID-Reader) oder, wenn ausgestattet mit einem Strichcode, mit Hilfe einer Strichcode-Leseeinrichtung erfasst und ein Kassenbon, der Produkte und zugehörige Preise auflistet, erstellt. Die Bezahlung des Gesamtpreises erfolgt durch den Kunden per Barzahlung, per Kreditkarte oder per "Near-Field-Communication" (abgekürzt NFC) fähigem Mobiltelefon mit entsprechender Bezahlapplikation (Bezahlsoftware) auf dem Mobiltelefon.

Produkte mit RFID-Etiketten auszustatten und RFID-Reader bei jedem Kassenschalter zur Erfassung der Produkte zu installieren ist relativ teuer. Zudem hat sich die RFID-mäßige Erfassung der Produkte beim Kassenterminal zwecks Verrechnung als unzuverlässig und langsam erwiesen. Nicht erfasst Produkte müssen neuerlich an dem RFID-Reader vorbeibewegt werden oder manuell mit Hilfe ihres Strichcodes erfasst werden. Produkte, für die eine Ausstattung mit RFID-Etikett nicht in Frage kommt, müssen jedenfalls manuell erfasst werden, was entweder mit Hilfe des Strichcodes des Produkts oder durch manuelle Eingabe einer Produktnummer des Produkts in das Kassensystem oder Auswahl des Produkts am Kassensystem geschieht. Dies führt zu unbefriedigenden Arbeitsabläufen (langsame Erfassung, Fehleranfälligkeit, usw.).

Die Erfindung hat sich daher die Aufgabe gestellt, die eingangs erwähnten Probleme zu beseitigen und eine effizientere Erfassung der Produkte zu ermöglichen.

### Zusammenfassung der Erfindung

Die Erfindung betrifft die Verwendung einer Anzeigevorrichtung zur räumlich lokalisierten Bereitstellung eines individuellen Produktdatensatzes in einem Selbstverbuchungssystem zwecks lokaler Übertragung des Produktdatensatzes von der Anzeigevorrichtung an ein bei der Anzeigevorrichtung mit Hilfe einer Selbstverbuchungs-Anfrage anfragendes Selbstverbuchungsgerät, wobei die Anzeigevorrichtung eine erste Funkschnittstelle zur Kommunikation mit einer Basisstation, eine Speicherstufe zur Speicherung eines Produktdatensatzes, der bei einer Kommunikation mit der Basisstation über die erste Funkschnittstelle empfangen wurde, und eine zweite Funkschnittstelle zur Übertragung des Produktdatensatzes aufweist, und wobei die Anzeigevorrichtung im Rahmen der Selbstverbuchungs-Anfrage einen Lagerstand zu einem durch die Selbstverbuchungs-Anfragen betroffenen Produkt mit Hilfe der ersten Funkschnittstelle abfragt.

Offenbart wird auch eine Anzeigevorrichtung, aufweisend eine erste Funkschnittstelle zur Kommunikation mit einer Basisstation, und eine Speicherstufe zur Speicherung eines Produktdatensatzes, der bei einer Kommunikation mit der Basisstation über die erste Funkschnittstelle empfangen wurde, und eine zweite Funkschnittstelle zur Übertragung des Produktdatensatzes, wobei es sich bei der Speicherstufe um einen Speicher der zweiten Funkschnittstelle handelt.

Auch ist ein Selbstverbuchungsgerät und ein Selbstverbuchungssystem offenbart.

Weiters ist eine Verwendung einer Anzeigevorrichtung zur räumlich lokalisierten Bereitstellung eines individuellen Produktdatensatzes in einem Selbstverbuchungssystem zwecks lokaler Übertragung des Produktdatensatzes von der Anzeigevorrichtung an ein bei der Anzeigevorrichtung mit Hilfe einer Selbstverbuchungs-Anfrage anfragendes Selbstverbuchungsgerät offenbart.

Mit den erfindungsgemäßen Maßnahmen geht der Vorteil einher, dass eine bestehende Infrastruktur eines Systems von elektronischen Anzeigevorrichtungen, insbesondere elektronische Preisanzeigeschilder, im Fachjargon auch "Electronic Shelf Labels", nachfolgend kurz ESLs genannt, als Systemkomponente zur Selbstverbuchung bzw. Selbstbezahlung (im Fachjargon "Self-Checkout-System" bezeichnet) nutzbar ist.

Ein Produktdatensatz kann aus einer Anzahl von Bits, Bytes oder größeren Datenmengen bzw. Struktur bestehen. Der Produktdatensatz kann einen Verweis aufweisen, der es dem Selbstverbuchungsgerät, das den Produktdatensatz empfängt, ermöglicht, über eine andere Kommunikationsverbindung (z.B. eine Internetverbindung mit einem Produktbeschreibungs- und / oder Produktpreis-Datenserver über WLAN oder UMTS) eine Information zum Produkt und / oder dessen Prei abzufragen, um diese Information dann weiterzuverarbeiten. Bevorzugt weist jedoch der Produktdatensatz selbst die Information zum Produkt und / oder dessen Preis auf, um direkt weiterverarbeitet zu werden.

Besagte ESL sind in den Verkaufsräumlichkeiten eines Selbstbedienungs-Einzelhändlers an den Regalen befestigt, auf denen die ihnen zugeordneten Produkte stehen. Will nun eine Kunde ein Produkt kaufen, entnimmt er es aus dem Regal und hält sein Selbstverbuchungsgerät (z.B. sein entsprechend ausgerüstetes Smartphone) in die Nähe des ESL oder berührt damit das ESL. Das Selbstverbuchungsgerät, auf dem eine Selbstverbuchungs-Applikation abgearbeitet wird, nimmt mit Hilfe seiner Geräte-Funkschnittstelle Kontakt zu der zweiten Funkschnittstelle des ESL auf und übermittelt eine Selbstverbuchungs-Anfrage an das ESL, z.B. mit Hilfe eines Selbstverbuchungs-Befehls, der dort erkannt und verarbeitet wird. Darauf reagiert das ESL mit einer Übertragung des Produktdatensatzes über die zweite Funkschnittstelle an das Selbstverbuchungsgerät, das die weitere Verarbeitung des Produktdatensatzes übernimmt.

**In** Abkehr von bekannten Self-Check-Out-Systemen, bei denen die Buchungsvorgänge für alle zu erfassenden Waren üblicherweise bei einem zentralen Kassentisch erfolgen, erfolgt der individuelle Buchungsvorgang für das betreffende Produkt im Wesentlichen am Platz des ESL (also am Regalplatz, wo das Produkt gelagert ist), zu dem das Produkt zugeordnet ist.

Die ESL sowie ihre Kommunikationsinfrastruktur (Basisstation und damit gekoppeltes Warenwirtschaftssystem) bilden somit einen Teil eines Selbstverbuchungssystems, wobei mehrere ESL zur räumlich verteilten Bereitstellung der individuellen Produktdatensätze an jenen Orten verwendet werden, an denen sich auch die betreffenden Produkte befinden. Die Verteilung der Produktdatensätze auf die individuellen ESL erfolgt automatisch und kann jederzeit unproblematisch und dynamisch an die sich im Selbstbedienungsladen ergebende Situation angepasst werden. Geht z.B. in einem Regal ein Produkt aus und wird dort ein anderes Produkt nachgeschlichen, kann dem dort befindliche ESL durch Kommunikation über die Basisstation der neue Produktdatensatz sofort mitgeteilt werden.

Vorteilhaft hervorzuheben ist hierbei, dass elektronische Produktetiketten befestigt an oder integriert in den jeweiligen Produkten überflüssig sind, die einzelnen Produkte also nicht mehr mit individuellen RFID-Etiketten ausgestattet sein müssen. Dies bringt ein erhebliches Einsparungspotential mit sich und löst auch das ökologische und logistische Problem des Recyclings solcher elektronsicher Produktetiketten. Auch wird der Erfassungsvorgang der Produkte wesentlich beschleunigt, weil die Produkte direkt bei ihrem Regal vom Kunden selbst erfass, also verbucht werden.

Wird in den ESL mit Hilfe des Produktdatensatzes die individuelle Produkt - und Preisinformation als solche bereitgestellt, so können die Selbstverbuchungen offline, also ohne zusätzliche Internetverbindung auf der Seite des Selbstverbuchungsgeräts erfolgen. Dies sorgt für störungsfreie und rasche Buchungsvorgänge und schützt vor kriminell motivierter Einflussnahme.

Der Gesamtvorgang des Einkaufens wird für den Kunden zudem wesentlich transparenter, weil er selbst die Verbuchung durchführt und somit immer vollen Überblick und Kontrolle über die gebuchten Waren hat. Die vom Kunden oft als störend empfundene Problematik einer möglicherweise fehlerhaften Buchung am Kassentisch (z.B. durch automatische RFID-basierte oder personalunterstütze manuelle Buchung) wird somit vollständig vermieden.

Es kann die zweite Funkschnittstelle auf kapazitive und/oder induktive Weise zum Kommunizieren ausgebildet sein. Sie kann zur Kommunikation gemäß einer Bluetooth-Spezifikation (z.B. definiert von SIG) oder auch gemäß einer ZigBee-Spezifikation ausgebildet sein. Für beide Kommunikationsarten ist jedoch die relativ weite Funk-Reichweite eher problematisch, da sie eine Benutzerinteraktion zur Auswahl von verschiedenen verfügbaren Kommunikationspartner (ESLs) erfordert, wenn sich ihre Kommunikationsbereiche überlagern.

Gemäß einer bevorzugten Ausbildung ist die zweite Funkschnittstelle zur Kommunikation gemäß einer RFID-Spezifikation (bzw. eines RFID-Standards) ausgebildet, wie beispielsweise ISO/IEC 10536, 14443, 15693, 10373 oder VDI 4470, 4472 oder ISO/IEC 18000 oder EPCglobal oder ISO/IEC 15961, 15962 oder zukünftig Spezifikationen. Als besonders vorteilhaft hat es sich erwiesen, wenn die zweite Schnittstelle zur Kommunikation gemäß einer NFC- Spezifikation ausgebildet ist, wie beispielsweise ISO/IEC 13157, -16353, -22536, -28361 oder zukünftiger Spezifikationen. In diesen Ausbildungsformen hat sich insbesondere die relativ kurze Funkreichweite (max. ca. 10, insbesondere 5 Zentimeter) als sehr vorteilhaft erwiesen, weil sie eine durch den Kunden selbst herbeigeführte räumlich eindeutige Zuordnung zwischen dem betreffenden ESL und dem Selbstverbuchungsgerät verlangt, um eine Selbstverbuchung durchzuführen.

Ein Selbstverbuchungsgerät kann z.B. ein portables Medienwiedergabegerät ohne Telefonfunktionalität, ein Smartphone, eine Smartwatch oder auch ein handlicher Tablet-Computer mit entsprechender Geräte-Funkschnittstelle sein. Seine Steuerstufe ist mit Hilfe eines Prozessors realisiert, auf der eine entsprechende Software oder Applikation abläuft, welche die Selbstverbuchungs-Anfrage steuert, konkret mit Hilfe des entsprechenden Kommunikationsprotokolls eine Verbindung mit der Anzeigevorrichtung aufbaut, einen Selbstverbuchungs-Anfragebefehl an diese sendet, Antwortdaten von ihr empfängt und im Sinne der Selbstverbuchung weiterverarbeitet.

Weitere, besonders vorteilhafte Ausgestaltungen und Weiterbildungen der Erfindung ergeben sich aus den abhängigen Ansprüchen sowie der nachfolgenden Beschreibung. Merkmale und entsprechende Vorteile, die im Zusammenhang mit einer Kategorie der Ansprüche erwähnt wurden, können auch bei einer anderen Kategorie der Ansprüche vorgesehen sein bzw. dort zum Tragen kommen.

Das ESL weist ein Anzeigemodul zur Anzeige von Preis und / oder Produktinformationen auf. Das Anzeigemodul kann einen ersten Mikrokontroller, der im Wesentlichen die Verarbeitungsstufe realisiert, eine Batterie, die eine Versorgungsspannung von z.B. drei Volt bereitstellt und das Anzeigemodul speist, aufweisen. Der Mikrokontroller kann einen internen Speicher aufweisen oder auch mit einem externen Speicher verbunden sein. Der Mikrokontroller kann als einen Bestandteil der ersten Funkschnittstelle einen integrierten Co-Prozessor sowie weitere elektronische Komponenten zur Realisierung der ersten Funkschnittstelle aufweisen bzw. mit Ihnen gekoppelt sein, sodass die Kommunikation gemäß einem ersten Funk-Kommunikationsprotokoll mit Hilfe des Co-Prozessors durchgeführt wird. Damit verbunden ist eine erste Antenne der ersten Funk-Schnittstelle. Zudem weist die Hardware des Anzeigemoduls eine Anzeigeeinrichtung auf, die über einen mit dem ersten Mikrokontroller gekoppelten zweiten Mikrokontroller verfügen kann, um von dem ersten Mikrokontroller an sie delegierte anzeigespezifische Aufgaben autonom zu erledigen. Die Anzeigeeinrichtung kann mit Hilfe von LCD-Technologie, bevorzugt jedoch auch mit extrem energiesparender Electronic-Ink-Technologie (auch E-Ink als Synonym für elektronisches Papier genannt) realisiert sein.

Das bei der ersten Funkschnittstelle zur Anwendung kommende erste Kommunikationsprotokolls kann beispielsweise gemäß dem "ZigBee" Standard, dem "BlueTooth" Standard oder auch gemäß einem proprietären Protokoll realisiert sein. Die erste Funkschnittstelle und gegebenenfalls auch die Verarbeitungsstufe weisen eine entsprechende Ausbildung der Hardware sowie eine geeignete Software auf, die auf dieser Hardware ausgeführt wird, um die Kommunikation gemäß dem jeweiligen Kommunikationsprotokoll zu erlauben.

Gemäß einem bevorzugten Ausführungsbeispiel kommt bei der ersten Funkschnittstelle ein proprietäres Funk-Kommunikationsprotokoll, das ein Zeitschlitzkommunikationsverfahren implementiert, zur Anwendung, mit dessen Hilfe mehrere ESL mit einer Basisstation kommunizieren können. Eine Basisstation dient als Schnittstelle zwischen einer kabelgebundenen Kommunikation mit z.B. einer Datenverarbeitungseinrichtung (z.B. einem Server) und einer kabellosen Kommunikation mit anderen Geräten, im vorliegenden Fall den ESL. Gemäß diesem Protokoll können die ESL zunächst bei einer Basisstation registriert bzw. ihr zugeordnet werden, um für eine FuncKommunikation mit dieser Basisstation benutzbar zu sein. Bei der Registrierung wird jedem ESL ein vordefinierter, individueller Zeitschlitz für die Kommunikation mit der Basisstation zugewiesen. Dabei kommen z.B. innerhalb von n Sekunden, z.B. 15 Sekunden, m Zeitschlitze, z.B. 255 Zeitschlitze, zum Einsatz. Die n Sekunden bilden einen Zeitschlitzzyklus, der sich fortwährend wiederholt und auch Synchronisationszyklus genannt wird. **In** diesem Zeitschlitzkommunikationsverfahren stehen also m Zeitschlitze innerhalb eines Synchronisationszyklus für eine Kommunikation mit ESLs zur Verfügung. Jedes der ESL ist einem der Zeitschlitze zugeordnet, wobei einem bestimmten Zeitschlitz auch mehrere ESLs zugeordnet sein können, z.B. 2, 3 oder 4 ESLs. Innerhalb von einer Minute existieren 4 Synchronisationszyklen mit je 255 Zeitschlitzen, sodass sich mit z.B. 2 ESLs pro Zeitschlitz eine Gesamtanzahl von 2040 ESLs adressieren lässt. Wenn in den Verkaufsräumlichkeiten eines Einzelhandelsunternehmens mehrere Basisstationen installiert sind, lassen sich Gruppen von ESLs, die der jeweiligen Basisstation zugeordnet sind, steuern.

Die ESLs können sich mit Hilfe einer Synchronisations-Signalstruktur (z.B. ein relativ kurzes Signal am Anfang des jeweiligen Zeitschlitzes) ausgesandt durch die Basisstation in jedem der Zeitschlitze mit dem Zeitraster des Zeitschlitzkommunikationsverfahrens erstmalig synchronisieren, um den Kommunikationsbetrieb mit der Basisstation zu starten, im Verlauf des Betriebs re-synchronisieren, wenn sie den synchronen Zustand durch irgendwelche Umstände verloren haben, und synchron halten, wenn kleinere Abweichungen vom synchronen Zustand vorliegen, die durch Ungenauigkeiten wie z.B. eine Drift ihrer inneren Uhr bedingt sind. Gemäß dem ersten Kommunikationsprotokoll ist jeder Zeitschlitz durch ein eindeutiges Zeitschlitzsymbol gekennzeichnet, wobei die Basisstation dazu ausgebildet ist, für den momentan vorliegenden Zeitschlitz ein Synchronisations-Datensignal aufweisend das Zeitschlitzsymbol auszusenden. Das ESL ist zum Wechseln von einem Schlaf- bzw. Ruhe-Zustand, nachfolgend kurz Schlaf-Zustand genannt, in einen Aktiv-Zustand zu einem Aufwachzeitpunkt ausgebildet und empfängt das Synchronisations-Datensignals im Aktiv-Zustand. Wenn das empfangene Zeitschlitzsymbol einen für das ESL bestimmten Zeitschlitz anzeigt definiert das ESL einen zu dem nächsten Auftreten des für sich bestimmten Zeitschlitzes korrespondierenden neuen Aufwachzeitpunkt in einem auf den momentan vorliegenden Zeitschlitzzyklus folgenden Zeitschlitzzyklus.

Jedes ESL stellt seinen Synchronismus mit der Basisstation alleine durch den Umstand des Erkennens des Zeitschlitzsymbols fest, das zu dem von ihr erwarteten Zeitpunkt bzw. in einem Erwartungszeitfenster auftritt und den für das ESL bestimmten Zeitschlitz anzeigt. Nachdem das ESL seinen Synchronismus wie zuvor erörtert festgestellt hat, reicht es grundsätzlich aus, wenn es wieder in den Schlaf- Zustand wechselt, weil der nächste Aufwachzeitpunkt automatisch durch den ihm bekannten Zeitraster des Zeitschlitzkommunikationsverfahrens bekannt ist. Das Definieren des neuen Aufwachzeitpunktes kann sich somit darauf beschränken, dass eine z.B. Zeitsteuerstufe (z.B. ein Timer) des ESL mit den bereits zuvor zum Wechseln vom Schlaf-Zustand in den Aktiv-Zustand benutzen Timing-Parameter neu gestartet wird. Danach kann das ESL wieder in den Schlaf-Zustand wechseln und dort verharren, bis dass ausgelöst durch die Zeitsteuerung wieder ein Aufwachen und Wechseln von dem Schlaf- Zustand in den Aktiv-Zustand zu dem neuen Aufwachzeitpunkt in dem nächsten Zeitschlitzzyklus durchgeführt wird. Das ESL muss jedoch nicht zwingend für den Rest des für sich bestimmten Zeitschlitzes im Schlaf-Zustand verharren, sondern kann auch während des Zeitschlitzes oder auch des Zeitschlitzzyklus weitere Aufgaben in einem Aktiv-Zustand bearbeiten. Die zuvor erörterte Zeitsteuerung arbeitet dann im Hintergrund unabhängig von seinen weiteren Aktivitäten. Das Zeitschlitzsymbol kann grundsätzlich beliebig gewählt werden. Als besonders vorteilhaft hat es sich erwiesen, wenn das Zeitschlitzsymbol mit Hilfe einer das ESL eindeutig identifizierenden Hardware-Adresse des ESL gebildet ist, bevorzugt durch die niederwertigsten Bits oder das niederwertigste Byte der Hardware-Adresse.

Das ESL weist zudem ein weiteres damit elektronisch verbundenes Funk-Modul mit besagter zweiten Funkschnittstelle auf.

Das Anzeigemodul, insbesondere der erste Mikrokontroller ist mit dem weiteren Funk-Modul gekoppelt. Auch das zweite Funk-Modul kann neben den für die physikalische Übermittlung von Signalen zur Funkkommunikation nötige Hardware einen eigenen, dritten Mikrokontroller sowie einen eigenen Speicher aufweisen. Wird die zweite Funkschnittstelle gemäß einer RFID oder NFC-Spezifikation ausgebildet, kann sie die für Ihren Betrieb nötige Versorgungsspannung aus den empfangenen Signalen generieren und unabhängig von besagter Batterie betrieben werden.

Soweit ein Produktdatensatz in dem ESL existiert und hinsichtlich seiner Verfügbarkeit keine Beschränkung besteht, wird der Produktdatensatz als Folge der empfangenen Selbstverbuchungs-Anfrage von dem ESL an das Selbstverbuchungsgerät übermittelt.

Der Produktdatensatz kann in dem Anzeigemodul in einem für den Mikrocontroller des Anzeigemoduls bestimmten Speicher gespeichert sein. Der Zugriff auf diesen Speicher kann von dem ersten Mikrocontroller aus erfolgen, was jedoch seinen aktiven Betriebszustand voraussetzt. Kommt jedoch ein Kommunikationsprotokoll zur Anwendung, welches einen möglichst energiesparenden Betrieb eines ESL erlaubt, sowie vorangehend erörtert, ist es von Vorteil, wenn der Zugriff auf besagten Speicher von dem dritten Mikrocontroller aus, welcher einen Bestandteil des weiteren Funkmoduls bildet, erfolgt. Wird beispielsweise der dritte Mikrocontroller als Folge einer RFID- oder NFC-Kommunikation mit Hilfe der zur Kommunikation nötigen Funksignale mit Energie versorgt, kann der zweite Mikrocontroller ohne Belastung der internen Batterie des ESL den Produktdatensatz auslesen und übergeben. Besonders vorteilhaft ist es, wenn die mit Hilfe der Funksignale realisierte Energieversorgung auch besagten Speicher versorgt, in dem der Produktdatensatz gespeichert ist. Dies kann so realisiert sein, dass bei Vorliegen einer solchen (extern) funksignalbasierten Energieversorgung mit Hilfe geeigneter Schaltmittel auch besagter Speicher im Anzeigemodul an diese Energieversorgung angekoppelt wird. Besonders bevorzugt handelt es sich bei dem Speicher, der den Produktdatensatz speichert, um einen Speicher der weiteren Funkschnittstelle und der erste Mikrocontroller hat für die Zwecke des Anlegens bzw. Veränderns des Produktdatensatzes vom Anzeigemodul aus Zugriff auf diesen Speicher.

Das erfindungsgemäße ESL kann im Rahmen der Selbstverbuchungsanfrage auch den Lagerstand zu dem durch die Selbstverbuchungsanfragen betroffenen Produkt mit Hilfe der ersten Funkschnittstelle abfragen. Dies kann von Vorteil sein, um im zentralen Warenwirtschaftssystem des Einzelhändlers den korrekten Lagerstand abzubilden. Auch kann dies das Problem eines augenscheinlich im Regal vergriffenen Produkts lösen. Ergibt nämlich, dass die Bearbeitung dieser Abfrage z.B. durch das Warenwirtschaftssystem, dass das betroffene Produkt noch im Lager verfügbar ist, kann dies in Folge über die zweite Funkschnittstelle an das Selbstverbuchungsgerät kommuniziert werden oder auch gleich ein Mitarbeiter des Kaufhauses mit dem Nachschlichten des betroffenen Produkts beauftragt werden. Der Kaufwunsch eines Kunden kann somit just-in-time befriedigt werden.

Gemäß einem weiteren Aspekt der Erfindung weist die Speicherstufe einen mit dem Produktdatensatz verknüpften Verfügbarkeitsdatensatz auf, mit dessen Hilfe die Verfügbarkeit des Produktdatensatzes steuerbar ist, und die Anzeigevorrichtung ist dazu ausgebildet, bei der Bearbeitung der Selbstverbuchungs-Anfrage den Verfügbarkeitsdatensatz zu prüfen und nur dann den Produktdatensatz zu übertragen, wenn er verfügbar ist. Der Verfügbarkeitsdatensatz verkörpert somit Steuerdaten zum Steuern der Verfügbarkeit des Produktdatensatzes bei einer Selbstverbuchungs-Anfrage. Auch der Verfügbarkeitsdatensatz kann ähnlich dem Produktdatensatz aus einer Anzahl von Bits, Bytes oder größeren Datenmengen bzw. Struktur bestehen. Der Verfügbarkeitsdatensatz kann ein Bestandteil des Produktdatensatzes sein oder separat zu diesem existieren, insbesondere auch im selben Speicher wie der Produktdatensatz oder einem anderen Speicher der Anzeigevorrichtung gespeichert sein. Auch der Verfügbarkeitsdatensatz bzw. sein steuernder Inhalt wurde bei einer Kommunikation mit der Basisstation über die erste Funkschnittstelle empfangen oder, wenn er bereits in dem ESL existierte, aktiviert bzw. den jeweiligen Anforderungen entsprechend angepasst. Es kann jedoch auch die Anzeigevorrichtung dazu ausgebildet sein, selbständig die Verfügbarkeit des Produktdatensatzes mit Hilfe des Verfügbarkeitsdatensatzes zu steuern, um die richtige Verfügbarkeit des Produktdatensatzes anzuzeigen. Dies kann insbesondere dann von Vorteil sein, wenn in der jeweiligen Situation ein hinsichtlich eines niedrigen Energieverbrauchs optimiertes Kommunikationsverhalten des Anzeigemoduls zu nicht akzeptablen Verzögerungen bei der Manipulation bzw. Einstellung des Verfügbarkeitsdatensatzes führen würde.

Zum Zweck einer grundlegenden Verfügbarkeitssteuerung ist es von Vorteil, wenn der Verfügbarkeitsdatensatz die Verfügbarkeit den Produktdatensatz als solches betrifft und die Anzeigevorrichtung dazu ausgebildet ist, den Verfügbarkeitsdatensatz zu prüfen, ob der Produktdatensatz gemäß seiner Verfügbarkeit übertragbar ist oder nicht, und die Anfrage entsprechend zu bearbeiten. Mithilfe dieser Maßnahme lässt sich zum Beispiel über die erste Funkschnittstelle eine globale Einstellung vornehmen. So kann zum Beispiel die Nichtverfügbarkeit des Produktdatensatzes den Umstand widerspiegeln, dass das Regal leer ist, weil bereits alle Produkte aus dem Regal entnommen wurden. Besonders vorteilhaft ist es, wenn das ESL eine Zählstufe aufweist, welche mitzählt, wie oft der Produktdatensatz angefragt wurde, was im Kontext der Selbstverbuchung gleichbedeutend mit der Anzahl der aus dem Regal entnommene Produkte ist. Verfügt das ESL auch über einen Produktanzahl-Speicher, indem die Anzahl der sich ursprünglich im Regal befindlichen Produkte gespeichert ist, kann durch einfachen Vergleich der Anzahl der entnommenen Produkte mit der Anzahl der ursprünglich im Regal befindlichen Produkte festgestellt werden, ob das Regal bereits leer sein muss, folglich kein weiterer Produktdatensatz zur Übertragung über die zweite Funkschnittstelle mehr verfügbar sein darf. Das ESL kann dann autonom die Verfügbarkeit des Produktdatensatzes unterbinden, also die entsprechende Einstellung im Verfügbarkeitsdatensatz vornehmen. Die globale Verfügbarkeit des Produktdatensatzes kann beispielsweise durch ein Statusbit im Speicher repräsentiert sein. Der Inhalt des Produktanzahl-Speichers kann mit Hilfe der Basisstation verändert bzw. gemäß einer Ausgangssituation (z.B. 20 Produkte sind ursprünglich im Regal) definiert werden.

Im Rahmen der Steuerung der Verfügbarkeit des Produktdatensatzes ist es auch von Vorteil, wenn die Verfügbarkeit des Produktdatensatzes eine zeitliche Verfügbarkeit betrifft, in der besagter Produktdatensatz verfügbar ist, und die Anzeigevorrichtung dazu ausgebildet ist, den Verfügbarkeitsdatensatz zu prüfen, ob der Produktdatensatz zeitlich beschränkt verfügbar ist, und die Anfrage innerhalb der zeitlichen Verfügbarkeit mit besagtem Produktdatensatz oder außerhalb der zeitlichen Verfügbarkeit mit einem anderen Produktdatensatz bzw. einem anderen Inhalten (oder garkeinem Produktdatensatz) oder überhaupt nicht oder auf andere Weise, wie z.B. durch interne Registrierung und / oder Kommunikation an das Warenwirtschaftssystem, zu bearbeiten. Mithilfe dieser Implementierung der Verfügbarkeit lassen sich zum Beispiel zeitlich begrenzte Angebote für ein Produkt definieren. So kann das betreffende Produkt zum Beispiel täglich in der Zeit vom 11:00 Uhr bis 14:00 Uhr um 10 % günstiger sein als in der verbleibenden Öffnungszeit des Supermarktes. Auf analoge Weise lässt sich auch eine datumsbezogene Verfügbarkeit unterschiedlicher Produktdatensätze steuern. Es werden also zu unterschiedlichen Zeiten unterschiedliche Produktdatensätze (Normalpreis mit Ausnahme des 24.10.2014, zu dem ein Weihnachtsrabattpreis gültig ist) als Folge einer Selbstverbuchungs-Anfrage übertragen. Sollte das Produkt aufgrund der hohen Nachfrage bereits vergriffen sein, wird bei der Selbstverbuchungs-Anfrage kein Produktdatensatz übertragen.

Gemäß einem anderen Aspekt der Erfindung betrifft die Verfügbarkeit des Produktdatensatzes seine mengenmäßige Verfügbarkeit, und die Anzeigevorrichtung ist dazu ausgebildet, den Verfügbarkeitsdatensatz zu prüfen, ob der Produktdatensatz mengenmäßig beschränkt ist, und die Anfrage innerhalb der mengenmäßigen Beschränkung mit besagtem Produktdatensatz und bei Überschreiten der mengenmäßigen Beschränkung mit einem anderen Produktdatensatz bzw. einem anderen Inhalt (oder gar keinem Produktdatensatz) oder überhaupt nicht oder auf andere Weise, wie z.B. durch interne Registrierung und / oder Kommunikation an das Warenwirtschaftssystem, zu bearbeiten. Mithilfe dieser Implementierung der Verfügbarkeit lassen sich zum Beispiel mengenmäßig begrenzte Angebote für ein Produkt definieren. So können von dem betreffenden Produkt zum Beispiel die ersten 100 Stück um 10 % günstiger sein als die verbleibende Stückzahl des betreffenden Produkts. Auch in diesem Fall ist die vorangehend erwähnte Zählstufe vorteilhaft einsetzbar, so dass von dem ESL durch Zählen der Selbstverbuchungs-Anfragen autonom feststellbar ist, wie viele Stück des Produktes bereits verkauft wurden.

Als besonders vorteilhaft hatte sich jedoch erwiesen, wenn die zuvor erwähnte zeitliche Beschränkung der Verfügbarkeit mit der mengenmäßigen Beschränkung der Verfügbarkeit kombiniert wird. Mithilfe dieser Implementierung der Verfügbarkeit lässt sich nun ein zeitlich und mengenmäßig begrenztes Angebot für ein Produkt definieren. So können von dem betreffenden Produkt zum Beispiel die ersten 100 Stück im Zeitfenster von 08:00 Uhr bis 10:00 Uhr um 10 % günstiger sein als die verbleibende Produktmenge.

Gemäß einem weiteren Aspekt der Erfindung ist die Anzeigevorrichtung bei der Bearbeitung einer Selbstverbuchungs-Anfrage zum Empfangen und Speichern von Benutzer- und / oder Geräte-Identifikationsdaten zur Identifikation des Benutzers des Selbstverbuchungsgeräts und / oder des Selbstverbuchungsgeräts ausgebildet. Das Speichern kann so erfolgen, dass zu jeder Anfrage die Identifikationsdaten selbst gespeichert werden. Das Speichern kann jedoch auch so erfolgen, dass bei einer ersten Anfrage die Identifikationsdaten selbst gespeichert werden und bei weiteren Anfragen mit bereits gespeicherten Identifikationsdaten ein diesen bereits existierenden Identifikationsdaten zugeordneter Zählerstand im ESL erhöht wird. Um die Speichernutzung des ESL zu optimieren, können die gespeicherten Identifikationsdaten bzw. Zählerstände nach einem vordefinierten Zeitpunkt oder nach Verstreichen einer vordefinierten Zeitspanne automatisch gelöscht werden, wie z.B. jeden Tag um 23:55 Uhr, oder nach einer Woche. Besonders vorteilhaft ist es wenn die Benutzer- bzw. Geräte-Identifikationsdaten eine eindeutige Kennung für jeden Benutzer bzw. sein Gerät bilden. So kann beispielsweise eine E-Mailadresse des Benutzers zur eindeutigen Identifikation eines Benutzers bzw. zu seiner eindeutigen Unterscheidbarkeit von anderen Benutzern verwendet werden. Ebenso kann auch eine eindeutige Hardware-Adresse (zum Beispiel eine MAC-Adresse) zur Identifikation eines Gerätes und letztendlich zur eindeutigen Unterscheidbarkeit dieses Gerätes von anderen Geräten verwendet werden. Bevorzugt ist das Selbstverbuchungsgerät dazu ausgebildet, bei jeder Selbstverbuchungs-Anfrage besagte Identifikationsdaten zu übermitteln, welche zur unmittelbaren oder weiteren Verarbeitung im ESL lokal gespeichert werden.

Die Benutzung der Identifikationsdaten hat sich insbesondere dann als vorteilhaft erwiesen, wenn die Anzeigevorrichtung zur Prüfung der mengenmäßigen Verfügbarkeit unter Berücksichtigung einer mengenmäßigen Beschränkung pro Benutzer oder Selbstverbuchungsgerät ausgebildet ist. Mithilfe dieser Implementierung der Verfügbarkeit lässt sich die mengenmäßige Verfügbarkeit eines Angebotes auf Benutzer- oder Geräteebene steuern. Damit lässt sich zum Beispiel ein Gutscheinsystem realisieren, bei dem für ein bestimmtes Gerät bzw. einen Benutzer ein um 10 % gegenüber dem Normalpreis reduzierter Preis nur z.B. zehnmal und nicht öfter in Anspruch genommen werden kann, was zehn einlösbaren Gutscheinen entspricht.

Auch hat sich die Benutzung der Identifikationsdaten als vorteilhaft erwiesen, wenn die Anzeigevorrichtung zum Prüfen der zeitlichen Verfügbarkeit unter Berücksichtigung einer mengenmäßigen Beschränkung pro Benutzer oder Selbstverbuchungsgerät ausgebildet ist. Damit lässt sich zum Beispiel ein Gutscheinsystem realisieren, bei dem für ein bestimmtes Gerät bzw. einen Benutzer ein um 10 % gegenüber dem Normalpreis reduzierter Preis nur z.B. zehn Mal und nicht öfter, jedoch nur in der Zeit zwischen dem 01.01.2015, 8:00 Uhr, und dem 06.01.2015, 18:00 Uhr, in Anspruch genommen werden kann.

Es steht also ein entsprechender Produktdatensatz für besagtes Gerät oder besagten Benutzer nur gemäß der angeführten Beschränkung zur Verfügung.

Gemäß einem weiteren Aspekt der Erfindung ist die Anzeigevorrichtung bei einer Kommunikation über die erste Funkschnittstelle zum Abgeben der Identifikationsdaten an die Basisstation ausgebildet. Mithilfe dieser Maßnahme wird die Interaktion zwischen den einzelnen ESL und verschiedenen Selbstverbuchungsgeräten auch für das Warenwirtschaftssystem des Selbstbedienungsladens oder andere Datenverarbeitungssysteme transparent und kann dort für weitere Maßnahmen oder Analysen verwendet werden.

Als besonders vorteilhaft hatte sich in diesem Zusammenhang erwiesen, dass die Anzeigevorrichtung dazu ausgebildet ist, nur jene Identifikationsdaten an die Basisstation abzugeben, für die eine Bestätigung eines Benutzers des Selbstverbuchungsgeräts als Zustimmung zur Speicherung bzw. Selbstverbuchung des von der Anzeigevorrichtung empfangenen Produktdatensatzes vorliegt, insbesondere eine Bestätigung eines Benutzers des Selbstverbuchungsgeräts zur Durchführung einer Selbstverbuchung im Sinne einer Bezahltransaktion für das Produkt, zu dem der Produktdatensatz gehört. Mithilfe dieser Maßnahme lässt sich ein weithin verbreitetes technisches Problem von modernen internetbasierten Suchmaschinen lösen. Benutzer verwenden Ihre unterschiedlichsten Geräte um mit Hilfe besagter Suchmaschinen um Informationen zu unterschiedlichsten Produkten am Internet zu suchen. Bei dieser Suche werden von den Suchmaschinen Ergebnisse geliefert. Ob nun ein Benutzer diese Ergebnisse dazu verwendet, um in einem Geschäft in z.B. seiner lokalen Umgebung einen Einkauf eines zuvor recherchierten Produkts zu tätigen oder nicht, bleibt jedoch für die Suchmaschinen bzw. ihre Betreiber im Verborgenen. Auf Seite der Suchmaschinen liegt nur die Information vor, dass ein bestimmter Benutzer bzw. ein bestimmtes Gerät, beide identifiziert durch besagte Identifikationsdaten, die auch bei der Suche am Internet übergeben werden, eine Suche zu einem bestimmten Produkt durchgeführt hat. Mithilfe der erfindungsgemäßen Maßnahmen ist es nun erstmals möglich, dieses Problem zu lösen, da die über die Basisstation empfangenen Identifikationsdaten direkt oder über ein an die Basisstation angekoppeltes Warenwirtschaft oder Verrechnungssystem eines Selbstbedienungsmarkts an eine internetbasierte Suchmaschine bzw. die Datenverarbeitungsanlage ihres Betreibers weitergeleitet werden. Dort werden die Identifikationsdaten, die bei der Selbstverbuchungsanfrage erhalten wurden, mit jenen abgeglichen, die bei der internetbasierten Produktsuche gespeichert wurden. Da mit Hilfe der Identifikationsdaten zumindest Geräte, die bei der internetbasierten Suche und bei der Interaktion vor Ort am Regal mit einer Anzeigevorrichtung verwendet werden, eindeutig identifizierbar und folglich als identisch einstufbar sind, lässt sich auf der Seite der internetbasierten Suchmaschine eindeutig abklären, ob und wo ein zuvor am Internet gesuchtes Produkt auch tatsächlich lokal gekauft wurde.

Gemäß einem weiteren Aspekt der Erfindung weist das Selbstverbuchungsgerät eine Detektionsstufe zur Detektion einer Bestätigung eines Benutzers des Selbstverbuchungsgeräts als Zustimmung zur Speicherung eines von der Anzeigevorrichtung empfangenen Produktdatensatzes auf. Die Detektionsstufe kann mit Hilfe einer Taste, einer Spracherkennungseinheit, oder einer Einheit zum Erkennen von Bewegungen des Geräts oder auch Gesten des Benutzers realisiert sein. Bevorzugt ist sie mit Hilfe eines Fingerabdrucksensors realisiert. Die Steuerstufe wirkt mit der Detektionsstufe zusammen oder bildet eine Einheit mit ihr und ist derart ausgebildet, dass sie nur bei detektierter Bestätigung die Speicherung (also Selbstverbuchung) des Produktdatensatzes, der als Folge der Selbstverbuchungs-Anfrage von der Anzeigevorrichtung erhalten wurde, veranlasst.

Besonders bevorzugt weist das Selbstverbuchungsgerät eine Produktliste-Speicherstufe auf, die mit Hilfe der Steuerstufe zugreifbar ist. Diese Speicherstufe dient zum Speichern von einem oder mehreren Produktdatensätzen. Somit stehen am Selbstverbuchungsgerät alle von den einzelnen Anzeigevorrichtungen übermittelten Produktdatensätze als Liste, z.B. in Form eines elektronischen Kassenbons als Ergebnis der Selbstverbuchungsvorgänge zur Verfügung. Bevorzugt ist diese Speicherstufe in der zweiten Funkschnittstelle integriert oder ihr zugeordnet.

Um in einem Selbstbedienungsladen eine vollständige Selbstbedienung von der Warenauswahl bis hin zum Bezahlvorgang zu realisieren, ist die Steuerstufe im Rahmen der Selbstverbuchung zum Durchführen einer Bezahltransaktion für einen von einer Anzeigevorrichtung übermittelten Produktdatensatz ausgebildet, bevorzugt nur wenn eine Zustimmung eines Benutzers dafür bei dem Selbstverbuchungsgerät mit Hilfe der Detektionsstufe detektiert wurde.

Es können dabei also individuelle Bezahltransaktionen für jeden Produktdatensatz, insbesondere unmittelbar im Zuge der Übermittlung von einem ESL, oder auch eine geblockte Bezahltransaktion für eine Gruppe oder Liste von Produktdatensätzen, die bei individuellen Übermittlungen von den ESL gesammelt wurden, durchgeführt werden. Eine derart gespeicherte Liste von Produktdatensätzen kann vom Benutzer des Selbstverbuchungsgeräts zu jedem beliebigen Zeitpunkt zur Verrechnung bzw. Bezahlung freigegeben werden.

Die Bezahlung kann mit Hilfe von im Selbstverbuchungsgerät gespeicherten Bezahlmethoden, z.B. Barzahlung mit im Selbstverbuchungsgerät gespeicherten Geldeinheiten oder Kreditkartenzahlung erfolgen. Die zutreffende, gewählte Zahlungsmethode kann beim Ausgang des Supermarktes durch Kommunikation über die Geräte-Schnittstelle mit einem Bezahlterminal zur Anwendung kommen. Die Bezahlung kann auch mit Hilfe einer z.B. internetbasierten Kommunikation mit einem Zahlungs-Dienstleister erfolgt.

Ein elektronischer Kassenbon enthält z.B. eine Liste mit Preis- und Produktinformationen, die mit Hilfe der Produktdatensätze übertragen wurden, sowie die zur Anwendung gekommenen Zahlungsdaten bzw. Zahlungsinformationen.

Weiters sind nachfolgende Aspekte offenbart:
Aspekt 1. Anzeigevorrichtung, aufweisend
   + eine erste Funkschnittstelle zur Kommunikation mit einer Basisstation, und
   + eine Speicherstufe zur Speicherung eines Produktdatensatzes, der bei einer Kommunikation mit der Basisstation über die erste Funkschnittstelle empfangen wurde, und
   + eine zweite Funkschnittstelle zur Übertragung des Produktdatensatzes,
   wobei es sich bei der Speicherstufe um einen Speicher der zweiten Funkschnittstelle handelt.
Aspekt 2. Anzeigevorrichtung nach Aspekt 1, wobei
   - die zweite Funkschnittstelle zur Kommunikation mit einem Selbstverbuchungsgerät vorgesehen ist, und wobei
   - die Anzeigevorrichtung zum Bearbeiten einer Selbstverbuchungs-Anfrage empfangen von dem Selbstverbuchungsgeräts zwecks Übertragung des Produktdatensatzes über die zweite Funkschnittstelle ausgebildet ist
Aspekt 3. Anzeigevorrichtung nach Aspekt 1 oder 2, die eine Verarbeitungsstufe aufweist, wobei die Verarbeitungsstufe für den Zweck des Anlegens bzw. Verändern des Produktdatensatzes Zugriff auf die Speicherstufe hat.
Aspekt 4. Anzeigevorrichtung nach Aspekt 3, die eine Spannungsversorgungsstufe, insbesondere eine Batterie, aufweist, die eine erste Versorgungsspannung bereitstellt, welche die Verarbeitungsstufe speist.
Aspekt 5. Anzeigevorrichtung nach einem der vorangehenden Aspekte, die ein Anzeigemodul, insbesondere die erste Funkschnittstelle aufweisend, zur Anzeige von Preis und/oder Produktinformation aufweist.
Aspekt 6. Anzeigevorrichtung nach einem der vorangehenden Aspekte, wobei die zweite Funkschnittstelle zum Kommunizieren gemäß einer RFID-Spezifikation oder einer NFC-Spezifikation ausgebildet ist.
Aspekt 7. Anzeigevorrichtung nach Aspekt 6, wobei die zweite Funkschnittstelle unabhängig von einer Spannungsversorgungsstufe, die zur Versorgung einer außerhalb der zweiten Funkschnittstelle lokalisierten Verarbeitungsstufe vorgesehen ist, zum Generieren einer für den Betrieb der zweiten Funkschnittstelle nötigen zweiten Versorgungspannung aus empfangenen Funksignalen ausgebildet ist.
Aspekt 8. Anzeigevorrichtung nach Aspekt 7, wobei die zweite Versorgungspannung auch die Speicherstufe versorgt, in welcher der Produktdatensatz gespeichert ist.
Aspekt 9. Anzeigevorrichtung nach einem der Aspekte 1 bis 5, wobei die zweite Funkschnittstelle zur Kommunikation gemäß einer Bluetooth-Spezifikation oder gemäß einer ZigBee-Spezifikation ausgebildet ist.
Aspekt 10. Anzeigevorrichtung nach einem der vorangehenden Aspekte, wobei die erste Funkschnittstelle zur Anwendung eines Kommunikationsprotokolls gemäß dem ZigBee-Standard, dem Bluetooth-Standard oder gemäß einem proprietären Protokoll realisiert ist.
Aspekt 11. Anzeigevorrichtung nach einem der vorangehenden Aspekte, wobei der Produktdatensatz selbst eine Information zum Produkt und/oder dessen Preis aufweist.
Aspekt 12. Anzeigevorrichtung nach einem der vorangehenden Aspekte, wobei der Produktdatensatz einen Verweis aufweist, der es einem Selbstverbuchungsgerät, das den Produktdatensatz empfängt, ermöglicht, über eine andere Kommunikationsverbindung eine Information zum Produkt und/oder dessen Preis abzufragen.
Aspekt 13. Anzeigevorrichtung nach einem der vorangehenden Aspekte, wobei
   - die Speicherstufe einen mit dem Produktdatensatz verknüpften Verfügbarkeitsdatensatz aufweist, mit dessen Hilfe die Verfügbarkeit des Produktdatensatzes steuerbar ist.
Aspekt 14. Anzeigevorrichtung nach Aspekt 13, wobei der Verfügbarkeitsdatensatz Steuerdaten zum Steuern der Verfügbarkeit des Produktdatensatzes bei einer Selbstverbuchungs-Anfrage verkörpert.
Aspekt 15. Anzeigevorrichtung nach Aspekt 12 oder 13, wobei der Verfügbarkeitsdatensatz ein Bestandteil des Produktdatensatzes ist oder separat zu diesem existiert.
Aspekt 16. Anzeigevorrichtung nach einem der Aspekte 13 - 15, wobei der Verfügbarkeitsdatensatz im selben Speicher wie der Produktdatensatz oder einem anderen Speicher der Anzeigevorrichtung gespeichert ist.
Aspekt 17. Anzeigevorrichtung nach einem der Aspekte 13 - 16, wobei der Verfügbarkeitsdatensatz bzw. sein steuernder Inhalt bei einer Kommunikation mit der Basisstation über die erste Funkschnittstelle empfangen wurde.
Aspekt 18. Anzeigevorrichtung nach einem der Aspekte 13 - 17, wobei der Verfügbarkeitsdatensatz bzw. sein steuernder Inhalt, wenn er bereits in der Anzeigevorrichtung existiert, bei einer Kommunikation mit der Basisstation über die erste Funkschnittstelle aktiviert bzw. den jeweiligen Anforderungen entsprechend angepasst wurde.
Aspekt 19. Anzeigevorrichtung nach einem der Aspekte 13 - 18, wobei die Anzeigevorrichtung dazu ausgebildet ist, selbständig die Verfügbarkeit des Produktdatensatzes mit Hilfe des Verfügbarkeitsdatensatzes zu steuern.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
Fig. 1 ein System;
Fig. 2 ein Zustandsdiagramm zur Erörterung eines proprietären Kommunikationsprotokolls;
Fig. 3 ein Blockschaltbild einer erfindungsgemäßen Anzeigevorrichtung;
Fig. 4 ein Blockschaltbild eines erfindungsgemäßen Selbstverbuchungsgeräts;
Fig. 5 ein zweites Ausführungsbeispiel des Systems;
Fig. 6 ein drittes Ausführungsbeispiel des Systems.

### Beschreibung der Ausführungsbeispiele

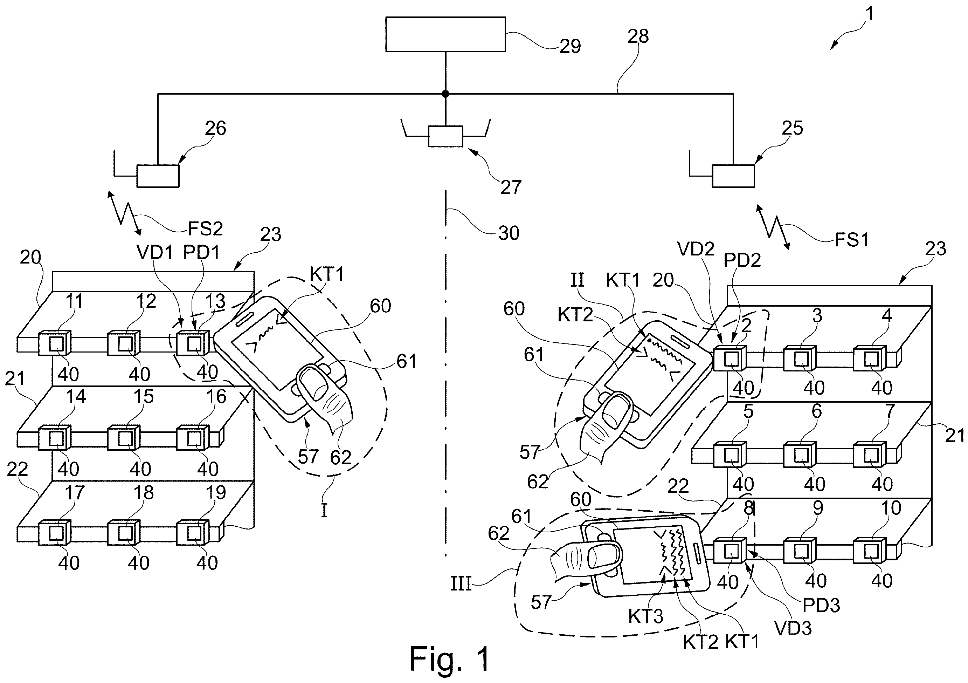

Die Figur 1 zeigt ein in den Räumlichkeiten eines Supermarkts installiertes System 1 zur Funkkommunikation mit Anzeigevorrichtungen realisierenden elektronischen Preisanzeigeschildern, nachfolgend kurz ESL 2 - 10 und ELS 11 - 19 genannt, mit dessen Hilfe ein Selbstverbuchungssystem realisiert ist. Jedes ESL 2 - 19 weist ein Display 40 auf und ist an Regalböden 20 - 22 eines Regals 23 korrespondierend zu auf dem Regalboden positionierten Produkten (nicht dargestellt) angebracht, zu denen mit ihrer Hilfe Preis- und Produktinformationen angezeigt werden. Das Systems weist auch zwei Basisstationen 25 und 26 auf, wobei die erste Basisstation 25 mit den ELS 2 - 10, symbolisiert durch erste Funksignale FS1, und die zweite Basisstation 26 mit den ELS 11 - 19, symbolisiert durch zweite Funksignale FS2, mit Hilfe eines proprietären ersten Kommunikationsprotokoll in Funkkontakt steht. Die logische Zuordnung (z.B. durch unterschiedliche Funkkanäle) der Gruppen von ESL 1 - 10 und 11 - 19 zu der jeweiligen Basisstation 25, 26 ist mit Hilfe der Linie 30 visualisiert. Es sei an dieser Stelle auch angemerkt, dass keine räumliche Trennung der Funkbereiche vorliegen muss, so wie dies in der Figur 1 aus Gründen der Übersichtlichkeit dargestellt wurde. Die Funkbereiche können auch (z.B. bereichsweise) überlappen. Das System 1 weist weiterhin einen WLAN-Access-Point, nachfolgend kurz Access-Point 27 genannt, auf, der zentral dargestellt die beiden Bereiche links und rechts der Linie 30 funktechnisch abdeckt. Es können jedoch auch mehrere Access-Points 27 vorhanden sein, um den gesamten Verkaufsraum funktechnisch zu versorgen. Mit Hilfe des WLAN-Access-Points 27 können mit nicht dargestellten tragbaren Warenwirtschaftsgeräten warenwirtschaftsbezogene Kommunikationen abwickelt werden. Der Access-Point 27 und die beiden Basisstationen 25, 26 sind über ein kabelgebundenes Netzwerk 28 mit einem Warenwirtschaftssystem-Server 29 des Supermarkts verbunden.

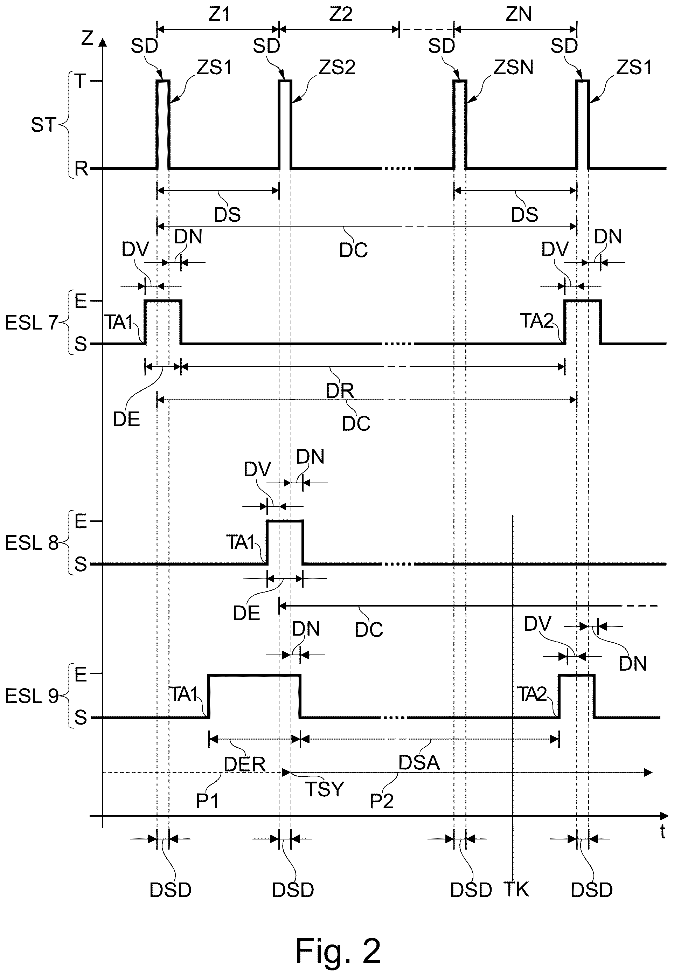

Nachfolgend wird mit Hilfe der Figur 2 auf das bei dem System 1 zur Anwendung kommende erste Kommunikationsprotokoll zur Kommunikation gemäß einem Zeitschlitzkommunikationsverfahren eingegangen. Das ZustandsDiagramm weist auf der Abszissenachse die Zeit t und auf der Ordinatenachse die Kommunikationszustände der bespielhaft angeführten ESL 7 - 9 sowie der ersten Basisstation 25 auf. Dabei zeigt T eine Sendezustand und R einen Empfangszustand der Basisstation 25 an und E einen empfangsbereiten Aktiv-Zustand sowie S einen energiesparenden Schlaf-Zustand der ESL 7 - 9 an, in dem keine Empfangsbereitschaft besteht.

Während einer Zeitschlitzzyklus-Dauer DC (z.B. 15 Sekunden) stehen N Zeitschlitze Z1 ... ZN (z.B. 256) mit identischer Zeitschlitzdauer DS (z.B. ca. 58 Millisekunden) zur Verfügung. Während der Zeitschlitzzyklus-Dauer DC wechselt die Basisstation 25 (mit dem Symbol "ST" gekennzeichnet) zwischen dem Sendezustand T und dem Ruhezustand R. Der Sendezustand T wird immer zu Beginn eines Zeitschlitzes Z1 ... ZN eingenommen und für eine Synchronisations-Datensignal-Dauer DSD (oder Sendezeitdauer DSD des Synchronisations-Datensignals SD) aufrecht erhalten, um mit dem jeweiligen Synchronisations-Datensignal SD das jeweilige zutreffende Zeitschlitzsymbol ZS1, ZS2, ... ZSN zu senden. Als das jeweilige Zeitschlitzsymbol ZS1 ...ZSN kommt die laufende Nummer des jeweiligen Zeitschlitzes Z1 ... ZN in der Reihenfolge des Auftretens der Zeitschlitze Z1 ... ZN zum Einsatz. Folglich ist der erste Zeitschlitz Z1 in Hexadezimal-Notation (durch "Hex" gekennzeichnet) mit dem Zeitschlitzsymbol Hex 00, der zweite Zeitschlitz Z2 mit dem Zeitschlitzsymbol Hex 01 usw. und der letzte Zeitschlitz ZN (im vorliegenden Beispiel der zweihundertsechsundfünfzigste Zeitschlitz Z256 mit dem Zeitschlitzsymbol Hex FF gekennzeichnet.

Das erste ESL 7 befindet sich im synchronen Zustand. Es erwacht zu einem ersten Aufwachzeitpunkt TA1 aus seinem Schlaf-Zustand S und wechselt mit einer relativ kurzen Vorlaufzeit DV vor einem erwarteten Auftreten eines Synchronisations-Datensignals SD in seinen empfangsbereiten Aktiv-Zustand E, empfängt das Synchronisations-Datensignal SD während einer Empfangszeitdauer DE mit dem ersten Zeitschlitzsymbol ZS1 (Hex 00), stellt durch Vergleich des niederwertigsten Bytes B0 seiner Hardware-Adresse (Hex 00) mit dem empfangenen Zeitschlitzsymbol ZS1 fest, dass der für das erste ESL 7 bestimmte erste Zeitschlitz Z1 angezeigt ist (Übereinstimmung der zu vergleichenden Bytes: B0 der Hardware-Adresse und erstes Zeitschlitzsymbol ZS1), behält die zum Steuern des Aufwachens benutzen Parameter seiner Zeitsteuerstufe für das Aufwachen im nachfolgenden Zeitschlitzzyklus zwecks Definition des neuen Aufwachzeitpunkts bei und wechselt mit einer relativ kurzen Nachlaufzeit DN zurück in den Schlaf-Zustand S, um nach Ablauf der vorgesehen Schlaf-Zustand-Verweilzeit DR planmäßig zum neuen (zweiten) Aufwachzeitpunkt TA2 mit besagter Vorlaufzeit VD vor dem neuerlichen Beginn des ersten Zeitschlitzzyklus Z1 aufzuwachen. Gleiches gilt auf analoge Weise für das zweite ESL 8, das sich ebenso wie das erste ESL 7 im synchronen Zustand befindet.

Das dritte ESL 9 befindet sich vor einem Synchronisationszeitpunkt TSY im asynchronen Zustand, das durch den parallel zur Zeitachse laufenden Pfeil P1 mit unterbrochener Linie angedeutet ist. Es erwacht zu einem zufällig gewählten ersten Aufwachzeitpunkt TA1 und wechselt von seinem Schlaf-Zustand S in den empfangsbereiten Aktiv-Zustand E und wartet in diesem Zustand bis zum Empfangen des nächsten Auftretens des Synchronisations-Datensignals SD, wobei im vorliegenden Fall das zweite Zeitschlitzsymbol ZS2 (Hex 01) empfangen wird. Das dritte ESL 9 erkennt anhand des niederwertigsten Bytes B0 (Hex 00) seiner Hardware-Adresse, dass der für sich bestimmte Zeitschlitz in dem vorliegenden Zeitschlitzzyklus bereits der Vergangenheit angehört und folglich der nächste Zeitschlitz mit dem Zeitschlitzsymbol Hex 00 erst im nächsten Zeitschlitzzyklus zu erwarten ist, und berechnet, dass der momentan erkannte Zeitschlitz Z2 um einen Zeitschlitz neben seinem angestammten Zeitschlitz Z1 liegt, was nachfolgend als Zeitschlitzdifferenz bezeichnet wird. Im dritten ESL 9 wird seine Zeitsteuerstufe nun so programmiert, dass der neue Aufwachzeitpunkt TA2 wie bei einem sich im synchronen Zustand befindlichen ESL mit besagter Vorlaufzeit DV vor dem Auftreten des ersten Zeitschlitzes Z1 des nachfolgenden Zeitschlitzzyklus liegt. Die abzuwartende Verweilzeit DSA im Schlaf-Zustand S wird automatisch berechnet. Somit befindet sich das dritte ESL 9 wieder im synchronen Zustand, was durch den zweiten Pfeil P2 mit durchgehender Linie angedeutet ist und wechselt von dem Aktiv-Zustand E in den Schlaf-Zustand S, um nach Ablauf der Verweilzeit DSA zum neuen Aufwachzeitpunkt TA2 wieder in seinen Aktiv-Zustand E zu wechseln.

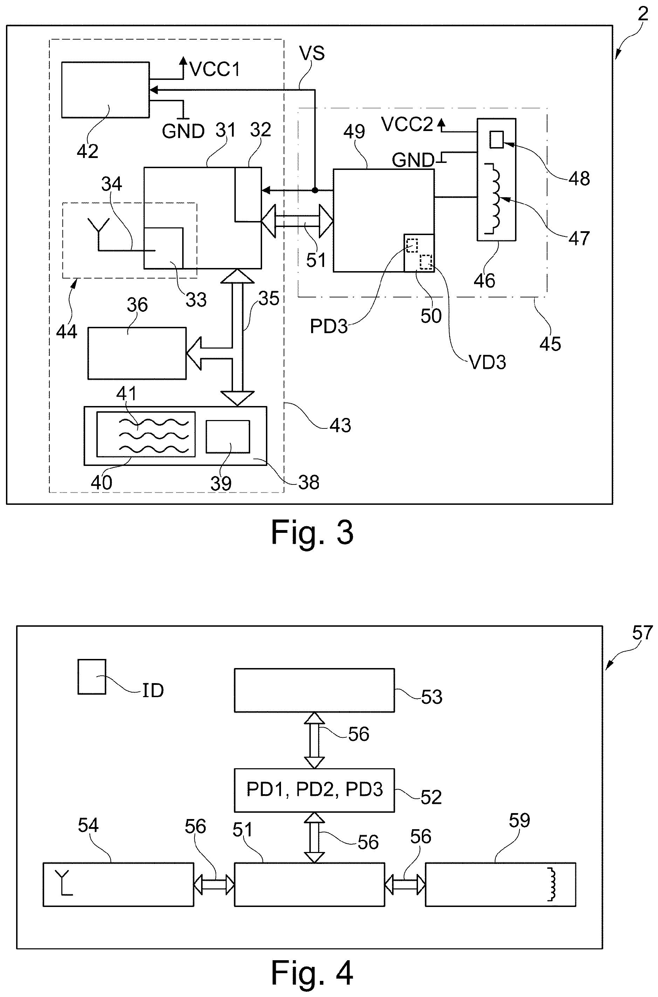

Nachfolgend wird auf die in der Figur 3 visualisierte Architektur des ESL 8 stellvertretend für die ESL 2 - 19 eingegangen.

Das ESL 8 weist eine Verarbeitungsstufe 31 zur Bereitstellung von Betriebszuständen wie z.B. den Aktiv-Zustand und den Schlaf-Zustand auf. Die Verarbeitungsstufe 31 ist mit Hilfe eines Mikrokontrollers, der einen internen Speicher 32 sowie einen Co-Prozessor 33, der an Sende- / Empfangsmittel 34 zur Kommunikation mit der Basisstation 25, 26 gekoppelt ist, auf. Die Verarbeitungsstufe 31 ist über ein erstes Bussystem 35 mit einem externen Speicher 36 und mit einer Anzeigeeinrichtung 38 gekoppelt. Die Anzeigeeinrichtung 38 weist einen eigenen Mikrokontroller 39 für anzeigebezogene Datenverarbeitung und ein Electronic-Ink-basiertes Display 40 zur Visualisierung von Information 41 auf.

Eine Spannungsversorgungsstufe 42, die mit Hilfe einer Batterie 42 realisiert ist, stellt für die beschriebenen elektronischen Komponenten eine erste Versorgungsspannung VCC1 gegenüber einem Bezugspotential GND bereit. Die beschriebenen elektronischen Komponenten sind in der Figur 3 als Anzeigemodul 43 gekennzeichnet. Der Co-Prozessor 33 und die Sende- / Empfangsmittel 34, von denen symbolisch lediglich eine Antenne visualisiert sind, bilden eine erste Funkschnittstelle 44 zur Kommunikation gemäß dem voranstehend beschriebenen Zeitschlitzkommunikationsprotokoll. Mit Hilfe der ersten Funkschnittstelle 44 lässt sich ein Produktdatensatz PD und ein Verfügbarkeitsdatensatz VD von der Basisstation25, 26 an das betreffende ESL 2 - 19 übermitteln.

Das ESL 8 weist jedoch auch eine zweite Funkschnittstelle realisiert mit Hilfe eines NFC-Moduls 45 auf. Das NFC-Modul 45 weist Analogkomponenten 46 auf, zu denen die induktiven Kopplungskomponenten 47, visualisiert als eine Spule, zur kontaktlosen Kommunikation mit einem andern NFC-fähigen Gerät (visualisiert in der Figur 4 als Strichcodelesegerät 57) und die Spannungsversorgungskomponenten 48 gehören. Bei Vorliegen einer induktiven Kopplung erzeugen die Spannungsversorgungskomponenten 48 eine zweite Versorgungspannung VCC2 gegenüber dem Bezugspotential GND zur Versorgung des NFC-Moduls 45, was den Betrieb seiner Digitalkomponenten ermöglicht. Die Digitalkomponenten sind mit Hilfe eines zweiten Mikrokontrollers 49 realisiert, der ebenfalls einen internen Speicher 50 aufweist und mit den Analogkomponenten 46 zwecks Kommunikation gemäß einem NFC-Kommunikationsprotokoll verbunden ist. Das NFC-Modul 45 ist mit einem zweiten Bus 51 mit dem Anzeigemodul 43, insbesondere mit dem ersten Mikrokontroller 31 verbunden. Das Betriebssystem des NFC-Moduls 49 kann im internen Speicher 50 oder auch in einem der Speicher 36, 32 des Anzeigemoduls gespeichert sein, auf die der zweite Mikrokotroller 49 zugreifen kann. Sobald es abgearbeitet wird, stellt es das NFC-Kommunikationsprotokoll zur Verfügung.

Der individuelle Produktdatensatz PD und der Verfügbarkeitsdatensatz VD, in der Figur 3 als PD3 und VD3 gekennzeichnet, wird mit Hilfe des ersten Mikrokontrollers 31 in den internen Speicher 50 des NFC-Moduls eingeschrieben, um dort unabhängig vom zeitlichen Aktivitätsverhalten des Anzeigemoduls 43 zur Verfügung zu stehen.

Die bisher beschriebenen Systemkomponenten bilden im Wesentlichen stationäre, also fix installierte Komponenten eines Selbstverbuchungssystems. Es speichert ESL 13 einen ersten Produkt- und Verfügbarkeitsdatensatz PD1 und VD1, ESL 2 einen zweiten Produkt- und Verfügbarkeitsdatensatz PD2 und VD2 und ESL8 den dritten Produkt- und Verfügbarkeitsdatensatz PD3 und VD3. Im vorliegenden Fall sei davon ausgegangen, dass die drei Verfügbarkeitsdatensätze VD1 - VD3 eine unbeschränkte Verfügbarkeit der zugehörigen Produktdatensätze PD1 - PD3 anzeigen. Jeder der Produktdatensätze PD1 - PD3 ist mit Hilfe einer Selbstverbuchungs-Anfrage abfragbar.

Ein in der Figur 1 zu drei verschiedenen Zeitpunkten an drei Positionen I, II, III unmittelbar benachbart zu den ESLs 2, 8, 13 und innerhalb ihres NFC-Kommunikationsbereiches dargestelltes Smartphone 57 realisiert ein mobiles Selbstverbuchungsgerät.

Das Smartphone 57 weist, wie in der Figur 4 veranschaulicht, eine Mobilfunkschnittstelle 54 zur Kommunikation in einem Mobilfunknetz eines Mobilfunkbetreibers, eine NFC-fähige Geräte-Funkschnittstelle 59 zur Kommunikation mit dem NFC-Modul 45, eine Steuerstufe 51 zum Steuern einer Selbstverbuchungs-Anfrage, eine Detektionsstufe 53 zur Detektion einer Bestätigung eines Benutzers realisiert mit Hilfe eines in der Figur 1 sichtbaren Fingerabdrucksensor 61, sowie eine Produktliste-Speicherstufe 52 zum Speichern von einem oder mehreren Produktdatensätzen PD, die von einem ESL 2- 19 als Folge der Selbstverbuchungs-Anfrage empfangen wurden. Ein Datenbus 56 verbindet die Komponenten 51, 52, 53, 54, und 59. Die Steuerstufe 51 weist auch ein in der Figur 1 visualisiertes Touchscreen-Display 60 auf, mit dessen Hilfe Klartextinformationen KT1 - KT3 (siehe Figur 1) zu den von den ESL 13, 2, 8 empfangenen Produktdatensätzen PD1 - PD3 visualisiert werden.

Das Smartphone 57 speichert auch Geräte-Identifikationsdaten ID, die bei der Kommunikation über die jeweilige Schnittstelle mitgesendet werden.

Ein Benutzer (nicht dargestellt) des Smartphone 57 bewegt sich bei seiner Shoppingtour durch das in der Fig. 1 visualisierte Geschäft und positioniert das Smartphone 57 zunächst an der Position I, eine NFC-Kommunikation mit dem NFC-Modul 45 des ESL 13 wird z.B. zu einem beliebigen und in der Figur 1 dargestellten Kommunikationszeitpunkt TK aufgebaut, eine Selbstverbuchungs-Abfrage wird vom Smartphone 57 unter Angabe der Geräte-Identifikationsdaten ID an das ESL 13 gesendet, vom NFC-Modul 45 wird der durch den ersten Verfügbarkeitsdatensatz VD1 als unbeschränkt verfügbar gekennzeichnete erste Produktdatensatz PD1 ausgelesen und an das Smartphone 57 mittel NFC-Kommunikation übermittelt, wo seine Klartextinformation KT1 (Produkt und Preis) gekennzeichnet als neuer Eintrag zwischen spitzen Klammern am Display 60 visualisiert wird, und mit Hilfe der Detektionsstufe 53 wird als Zustimmung zur Selbstverbuchung der Fingerabdruck eines Fingers 62 des Benutzers geprüft und bei Vorliegen eines positiven Prüfungsergebnisses der erste Produktdatensatz PD1 mit Hilfe der Produktliste-Speicherstufe 52 gespeichert. Das Produkt wird vom Benutzer vorher oder nachher aus dem Regalplatz entnommen, wo das ESL 13 montiert ist, und im Einkaufswagen abgelegt.

Daraufhin wird das Smartphone 57 zum ESL 2 vertragen, wo der zuvor beschriebene Vorgang der Selbstverbuchung neuerlich für den zweiten Produktdatensatz PD2 durchgeführt wird. In weitere Folge wird das Smartphone 57 zum ESL 8 vertragen und ein abschließendes Mal der Selbstverbuchungsvorgang durchgeführt, sodass sich nun die drei Produktdatensätze PD1 - PD3 im Smartphone 57 befinden.

Je nach Implementierung wird für jeden der Produktdatensätze PD1 - PD3 unmittelbar bei seiner Speicherung eine Bezahltransaktion oder für alle drei zusammen, abschließend eine gemeinsame Bezahltransaktion durchgeführt.

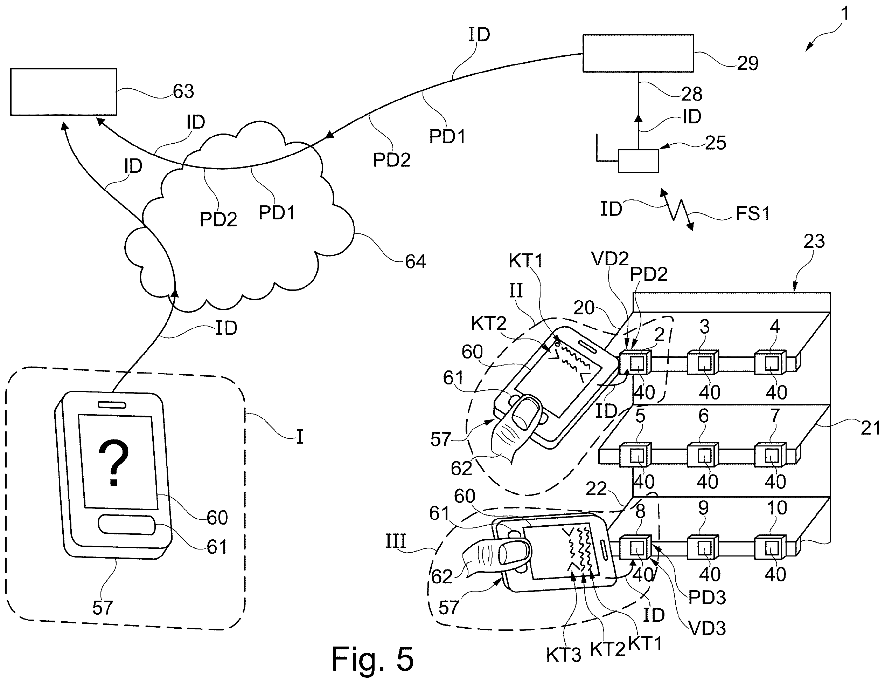

In der Figur 5 ist ein Selbstverbuchungssystem mit Suchmaschine-Feedback-Funktion visualisiert, wobei auf die in der Fig. 1 dargestellte linke Hälfte des Selbstbedienungsladens aus Gründen der Übersichtlichkeit verzichtet wurde. Das Smartphone 57 wird zunächst z.B. an einer Position I außerhalb der Räumlichkeiten des Supermarktes zur Produktinformationssuche verwendet, wobei über das Internet 64 ein internetbasierte Suchmaschine 63 mit der Suchanfrage und den Geräte-Identifikationsdaten ID kontaktiert wird. Die Suchanfrage betrifft Details zu dem im Supermarkt durch das ESL 2 gekennzeichneten Produkt. Diese Suchanfrage zusammen mit den Geräte-Identifikationsdaten ID und dem Suchergebnis wird in der Suchmaschine 63 gespeichert. Zu einem späteren Zeitpunkt führt der Benutzer des Smartphone 57 in den Räumlichkeiten des Supermarktes eine Selbstverbuchungs-Anfrage bei dem ESL 2 durch und bestätigt die Selbstverbuchung (z.B. Bezahlung des betreffenden Produkts). Vom ESL 2 werden daraufhin im nächsten Aktiv-Zustand die Geräte-Identifikationsdaten ID an die Basisstation 25 und von dort aus an den Warenwirtschaftssystem-Server 29 des Supermarkts übergeben, wo auch die Verbindung zwischen dem Produkt, welches dem ESL 2 zugeordnet ist und dem ESL 2 bekannt ist. Der Server 29 leitet daraufhin eine Produktidentifikation, z.B. den ersten Produktdatensatz PD1 zusammen mit den Geräte-Identifikationsdaten ID an die Suchmaschine 63 weiter, wo sich die Informationslücke zwischen Suchanfrage zu einem Produkt bzw. Suchergebnis und tatsächlichem Produktkauf durch das Feedback des ESL 2 schließen lässt.

In der Zwischenzeit kann zu der ursprünglichen Suchanfrage Werbung mit Bezug zu dem gesuchten Produkt oder zum allgemeinen Benutzerverhalten des Benutzers an das Smartphone 57 übermittelt worden sein. Ob diese Werbung zu einem weiteren Kauf führte oder nicht lässt sich nun mit den Beschriebenen Maßnahmen ebenfalls ermitteln. Betrifft die Werbung z.B. das mit Hilfe des ESL 8 gekennzeichnete Produkt und führt der Benutzer den Selbstverbuchungsvorgang auch für dieses Produkt durch, kann mit Hilfe des Feedbacks durch das ESL 8 auf Seite der Suchmaschine die gestellte Frage positiv beantwortet werden.

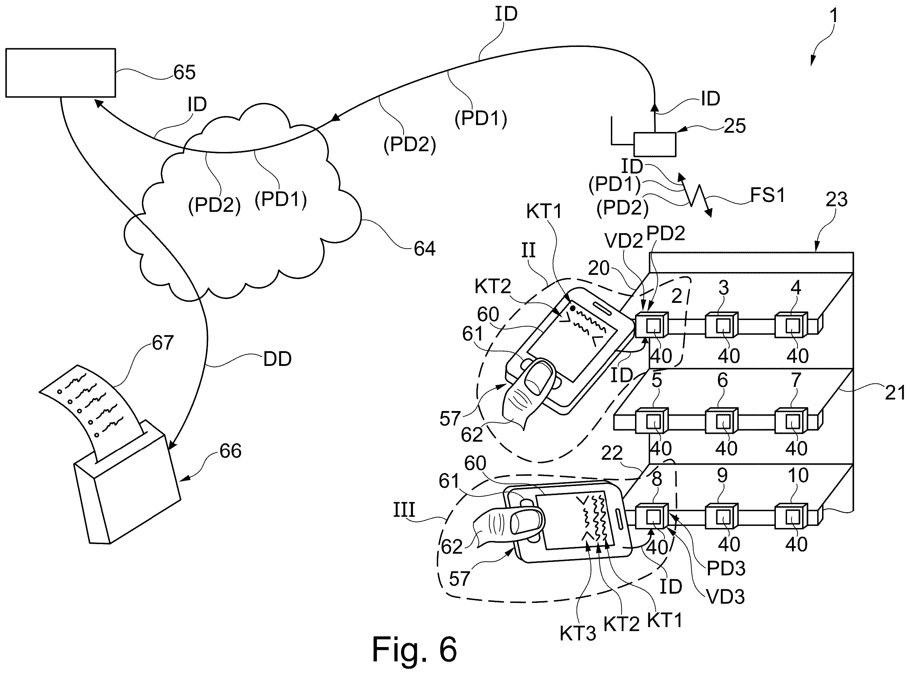

Mit Hilfe der Feedbackfunktionalität der ESL 1 - 19 lässt sich auch eine cloud- bzw. internetbasiertes Warenwirtschaftssystem realisieren, bei dem die Funktionalität des in der Figur 1 dargestellten Servers 29 in eine Datenverarbeitungsanlage 65 eines Anbieters für ausgelagerte Warenwirtschaftsdienste verlagert wird. Bei jedem Selbstverbuchungsvorgang werden die Geräte-Identifikationsdaten ID direkt von der Basisstation an die entfernte Datenverarbeitungsanlage 65 geleifert. Dort ist ein Zusammenhang zwischen dem jeweiligen die Geräte-Identifikationsdaten ID liefernden ESL 2 - 19 und den ihnen zugeordneten Produkten bekannt, folglich liegen dort auch die Produktdatensätze PD1 - PD19 vor. Sind die Produktdatensätze dort nicht bekannt, können diese wie in der Fig. 6 für die Produktdatensätze PD1 und PD2 in Klammern angedeutet an die Datenverarbeitungsanlage 65 geleifert werden. Von dort aus kann über das Internet 64 ein lokal im Supermarkt installierter Belegdrucker 66 mit Druckdaten DD angesteuert werden und ein Kassenbon 67 gedruckt werden, der alle jene Produkte aufweist, für die eine Bezahltransaktion ausgeführt wurde.

Die Erfindung erlaubt auch die Selbstverbuchung von Gewichtsprodukten, deren Preis sich erst durch Wiegen des Produkts ergibt. So kann z.B. eine netzwerkfähige Waage mit einem erfindungsgemäßen ESL (siehe Figur 3) ausgerüstet sein. Ein Produkt wird vom Kunden auf die Waage gelegt, der Kunde selektiert am Bildschirm der Waage das Produkt oder die Produktklasse, die Waage bestimmt das Gewicht und erstellt und übermittelt den Produktdatensatz mit Hilfe der Basisstation an das ESL, mit der die Waage ausgerüstet ist. Wie bereits in Detail erörtert, führt der Benutzer nun mit Hilfe seines Smartphone 57 eine Selbstverbuchungs-Anfrage bei diesem ESL durch, wodurch der Produktdatensatz des Gewichtsprodukts an das Smartphone 57 übermittelt wird. Der Verfügbarkeitsdatensatz kann benützt werden, um den betreffenden Produktdatensatz nur ein einziges Mal abrufbar zu machen und ihn in jedem Fall nach einer voreingestellten Zeitspanne bei Ausbleiben der Selbstverbuchungs-Anfrage (z.B. 30 Sekunden) zu löschen, um die Waage so rasch als möglich für den nächsten Wiegevorgang verwenden zu können.

Gemäß einem weiteren, nicht dargestellten Ausführungsbeispiel der Erfindung können beim Betreten eines Selbstbedienungsladens mit Hilfe eines geeigneten Terminals die Identifikationsdaten ID vom Selbstverbuchungsgerät 57 abgefragt und an das Warenwirtschaftssystem übergeben werden. Für den betreffenden Benutzer bzw. sein Gerät werden individuelle Produktdatensätze PD an alle oder ausgewählte ESLs übermittelt, um für diesen Benutzer (z.B. entsprechend seinem vergangen Shoppingverhalten) individualisierte Angebote verfügbar zu machen. Die Verfügbarkeit der individuellen Produktdatensätze für das betreffende Gerät 57 wird, wie bereits erörtert, mit Hilfe des Verfügbarkeitsdatensatzes VD gesteuert. Die individuellen Produktdatensätze PD werden also bei einer Selbstverbuchungs-Anfrage nur an dieses betreffende Gerät 57 übermittelt. Für andere Geräte werden andere Produktdatensätze in den ESLs gespeichert und bei einer Selbstverbuchungs-Anfrage an das anfragende Gerät übermittelt.

Ganz allgemein sei an dieser Stelle festgehalten, dass eine Bezahltransaktion als integraler Bestandteil einer Selbstverbuchung interpretiert werden kann. Somit kann jede Selbstverbuchung eines Produkts eine Bezahltranskation für dieses Produkt einbeziehen.

Es wird abschließend noch einmal darauf hingewiesen, dass es sich bei den vorangehend detailliert beschriebenen Figuren nur um Ausführungsbeispiele handelt, welche von einer Fachperson in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Verwendung einer Anzeigevorrichtung (2-19) zur räumlich lokalisierten Bereitstellung eines individuellen Produktdatensatzes (PD) in einem Selbstverbuchungssystem zwecks lokaler Übertragung des Produktdatensatzes (PD) von der Anzeigevorrichtung (2-19) an ein bei der Anzeigevorrichtung (2-19) mit Hilfe einer Selbstverbuchungs-Anfrage anfragendes Selbstverbuchungsgerät (57),
wobei die Anzeigevorrichtung (2-19) eine erste Funkschnittstelle (44) zur Kommunikation mit einer Basisstation (25, 26), eine Speicherstufe (32, 36, 50) zur Speicherung eines Produktdatensatzes (PD), der bei einer Kommunikation mit der Basisstation (25, 26) über die erste Funkschnittstelle (44) empfangen wurde, und eine zweite Funkschnittstelle (45) zur Übertragung des Produktdatensatzes (PD) aufweist, und
wobei die Anzeigevorrichtung (2-19) im Rahmen der Selbstverbuchungs-Anfrage einen Lagerstand zu einem durch die Selbstverbuchungs-Anfrage betroffenen Produkt mit Hilfe der ersten Funkschnittstelle (44) abfragt.

2. Verwendung nach Anspruch 1, wobei die Anzeigevorrichtung (2-19) den Lagerstand zu dem durch die Selbstverbuchungs-Anfrage betroffenen Produkt bei einem zentralen Warenwirtschaftssystem abfragt.

3. Verwendung nach Anspruch 1 oder 2, wobei, wenn die Bearbeitung der Abfrage ergibt, dass das betroffene Produkt noch in einem Lager verfügbar ist, dies in Folge über die zweite Funkschnittstelle (45) an das Selbstverbuchungsgerät (57) kommuniziert wird.

4. Verwendung nach Anspruch 1 oder 2, wobei, wenn die Bearbeitung der Abfrage ergibt, dass das betroffene Produkt noch in einem Lager verfügbar ist, ein Nachschlichten des Produkts beauftragt wird.

5. Verwendung nach einem der vorangehenden Ansprüche, wobei die Speicherstufe (32, 36, 50) einen mit dem Produktdatensatz (PD) verknüpften Verfügbarkeitsdatensatz (VD) aufweist, mit dessen Hilfe eine Verfügbarkeit des Produktdatensatzes (PD) steuerbar ist, und
wobei die Anzeigevorrichtung (2-19) bei der Bearbeitung der Selbstverbuchungs-Anfrage den Verfügbarkeitsdatensatz (VD) prüft und den Produktdatensatz (PD) nur dann überträgt, wenn er verfügbar ist.

6. Verwendung nach Anspruch 5, wobei eine Nichtverfügbarkeit des Produktdatensatzes (PD) den Umstand widerspiegelt, dass ein Regal leer ist, weil bereits alle Produkte aus dem Regal entnommen wurden.

7. Verwendung nach Anspruch 6, wobei mit einer Zählstufe der Anzeigevorrichtung (2-19) mitgezählt wird, wie oft der Produktdatensatz (PD) angefragt wurde, was im Kontext einer Selbstverbuchung gleichbedeutend mit einer Anzahl der aus dem Regal entnommenen Produkte ist.

8. Verwendung nach Anspruch 7, wobei die Anzeigevorrichtung (2-19) über einen Produktanzahl-Speicher, in dem die Anzahl der sich ursprünglich in dem Regal befindlichen Produkte gespeichert ist, verfügt, und
wobei durch einen Vergleich der Anzahl der entnommenen Produkte mit einer Anzahl der ursprünglichen in dem Regal befindlichen Produkte festgestellt wird, ob das Regal bereits leer sein muss und folglich kein weiterer Produktdatensatz (PD) zur Übertragung über die zweite Funkschnittstelle (45) mehr verfügbar sein darf.

9. Verwendung nach Anspruch 8, wobei ein Inhalt des Produktanzahl-Speichers mit Hilfe der Basisstation (25, 26) verändert bzw. gemäß einer Ausgangsituation definiert wird.

10. Verwendung nach einem der Ansprüche 5 bis 9, wobei die Anzeigevorrichtung (2-19) autonom die Verfügbarkeit des Produktdatensatzes (PD) unterbindet.

11. Verwendung nach einem der Ansprüche 5 bis 10, wobei eine globale Verfügbarkeit des Produktdatensatzes (PD) durch ein Statusbit in der Speicherstufe (32, 36, 50) repräsentiert ist.
